# DEMANDE DE BREVET EUROPEEN

(11) **EP 4 684 903 A1**
(43) Date de publication de la demande: **28.01.2026**
(21) Numéro de dépôt: 24190559.5
(22) Date de dépôt: 24.07.2024
(51) Int. Cl.: B23K 26/0622, B23K 26/08, B23K 26/10, B23K 26/362, G04B 13/02, G04D 3/00, B23K 26/36, B23K 103/04, B23K 101/00, B23K 103/14, B23K 103/00

(54) **PROCÉDÉ DE FABRICATION D'UN COMPOSANT HORLOGER**

(71) Demandeur: ROLEX SA, 1211 Genève 26 (CH)
(72) Inventeur: Farine, Sylvain, 2022 Bevaix (CH); Vaucher, Philippe, 2605 Sonceboz (CH)
(74) Mandataire: Moinas & Savoye SARL

(57) **Abrégé**

Procédé de fabrication d'un composant horloger (40), comprenant les étapes suivantes:
- Se munir d'un bloc à usiner ;
- Former une ébauche de composant horloger comprenant une forme de révolution autour d'un axe de révolution (A) ;
caractérisé en ce qu'il comprend une étape consistant à :
- Usiner l'ébauche à l'aide d'un faisceau laser décentré (11) dont la direction n'est pas parallèle à l'axe de révolution (A), ne croise pas l'axe de révolution (A), et n'est pas tangente à l'ébauche à usiner.

## Description

La présente invention concerne un procédé de fabrication d'un composant horloger. Elle porte aussi sur un dispositif d'usinage qui met en oeuvre un tel procédé de fabrication.

La réalisation d'un composant horloger nécessite de trouver un bon compromis entre les exigences suivantes :
- Un matériau performant, qui répond au minimum aux exigences mécaniques élevées imposées par l'application horlogère ;
- Un procédé de fabrication suffisamment simple pour envisager une mise en oeuvre à grande échelle, de manière fiable et robuste.

Une première solution existante consiste à fabriquer un composant horloger en métal par un procédé de décolletage, impliquant un outil mécanique de coupe qui agit directement au contact avec un bloc initial, pour le mettre en forme par enlèvement de matière. Cet outil de coupe vient au contact direct avec le bloc, au contraire d'un usinage laser dans lequel un faisceau laser permet d'agir à distance sur un tel bloc. Un tel procédé permet d'atteindre une grande précision de manière rapide et bien maîtrisée. Le métal présente toutefois, selon l'alliage utilisé, l'inconvénient d'être sensible aux champs magnétiques, ce qui peut induire des problèmes de fiabilité de la marche d'une montre dans certaines circonstances d'utilisation. D'autre part, le métal n'est pas toujours suffisamment dur et nécessite des opérations complémentaires pour augmenter sa dureté, et parfois son état de surface, ce qui complexifie finalement le procédé de fabrication. Finalement, certains alliages amagnétiques et durs se révèlent être trop difficiles à usiner, car entrainant une trop forte usure des outils de coupe.

Une deuxième solution existante repose sur le choix d'un matériau amagnétique très rigide, comme une céramique, qui ne présente pas certains défauts du métal de la première solution. Toutefois, la fabrication d'un composant horloger en céramique nécessite un procédé plus complexe, impliquant en général un usinage laser, qui est plus délicat à maîtriser et plus lent qu'un usinage traditionnel. En effet, l'usinage laser ne permet pas de fabriquer des composants présentant des géométries tridimensionnelles complexes, en particulier avec la haute précision nécessaire pour le bon fonctionnement d'un composant horloger. Par exemple, il n'est pas possible de réaliser l'usinage de dents présentant certaines formes complexes. De plus, pour certaines réalisations comme un pignon d'échappement, des éléments sont fabriqués séparément puis assemblés sur un arbre par chassage, ce qui engendre des problèmes de jeux et de risque de casse.

Ainsi, la présente invention a pour objet de proposer une solution de fabrication d'un composant horloger qui répond au mieux aux exigences susmentionnées et améliore les solutions existantes.

Plus précisément, l'invention a pour objet de définir une solution de fabrication d'un composant horloger permettant de fabriquer simplement et de manière fiable et robuste un composant horloger aux propriétés mécaniques optimisées.

A cet effet, l'invention repose sur un procédé de fabrication d'un composant horloger, comprenant les étapes suivantes :
- Se munir d'un bloc à usiner ;
- Former une ébauche de composant horloger comprenant une forme de révolution autour d'un axe de révolution ;
caractérisé en ce qu'il comprend une étape consistant à :
- Usiner l'ébauche à l'aide d'un faisceau laser décentré dont la direction n'est pas parallèle à l'axe de révolution, ne croise pas l'axe de révolution, et n'est pas tangente à l'ébauche à usiner.

Le bloc à usiner peut être intégralement en céramique, préférentiellement une céramique frittée et durcie.

L'invention porte aussi sur un dispositif d'usinage comprenant au moins une broche rotative configurée pour maintenir un bloc à usiner et un laser pouvant être décentré, configuré pour mettre en oeuvre un procédé de fabrication d'un composant horloger tel que décrit ci-dessus.

L'invention porte aussi sur un composant horloger en matériau de dureté supérieure ou égale à 800 HV, voire supérieure ou égale à 1000 HV, voire supérieure ou égale à 1200 HV, notamment en céramique à base de zircone ou à base d'alumine, caractérisé en ce qu'il comprend une structure monobloc comprenant un axe de rotation et au moins une dent, dont une section par un plan perpendiculaire à l'axe de rotation présente une forme comprenant une portion à profil évasé, la section normale à l'axe de rotation présentant une forme dont la dimension orthoradiale augmente en s'éloignant radialement de l'axe de rotation.

L'invention est plus précisément définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente une vue schématique du profil transversal d'une dent de pignon d'échappement qui peut être fabriquée par le procédé de fabrication selon l'invention.
La figure 2 représente une vue schématique d'une phase d'usinage d'une ébauche de dent de pignon d'échappement selon une première phase d'une troisième étape du procédé de fabrication selon un mode de réalisation de l'invention.
La figure 3 représente schématiquement un traitement laser par couche d'une ébauche de pignon d'échappement selon une première approche d'une première phase d'une troisième étape du procédé de fabrication selon le mode de réalisation de l'invention.
La figure 4 illustre la répartition dans le temps et la durée des tirs laser pour les couches représentées sur la figure 3.
La figure 5 représente schématiquement un traitement laser d'une ébauche de pignon d'échappement selon une deuxième approche d'une première phase d'une troisième étape du procédé de fabrication selon le mode de réalisation de l'invention.
Les figures 6 et 7 représentent schématiquement un traitement laser d'une ébauche de pignon d'échappement selon une première approche d'une deuxième phase d'une troisième étape du procédé de fabrication selon le mode de réalisation de l'invention.
Les figures 8 et 9 représentent schématiquement un traitement laser d'une ébauche de pignon d'échappement selon une deuxième approche d'une deuxième phase d'une troisième étape du procédé de fabrication selon le mode de réalisation de l'invention.
La figure 10 représente une vue en perspective d'un composant horloger selon un mode de réalisation de l'invention.

Pour simplifier la description, nous utiliserons par convention la direction longitudinale pour la direction principale le long de laquelle s'étend un composant horloger considéré, et/ou particulièrement un axe de révolution d'un composant horloger. L'adjectif « transversal » sera utilisé pour désigner une direction perpendiculaire à la direction longitudinale.

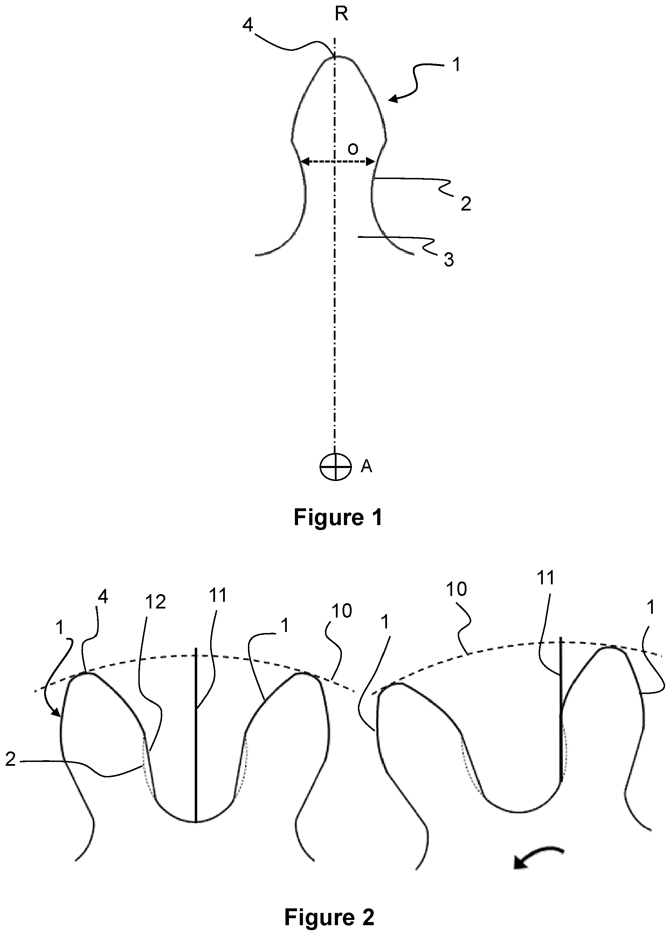

L'invention va être décrite dans le cadre de la réalisation d'un pignon d'échappement présentant des dents identiques dont un profil transversal, c'est à dire dans un plan transversal, autrement dit obtenu par une section par un plan perpendiculaire à l'axe de révolution A du pignon d'échappement, est représenté par la figure 1. Un tel profil de dent 1 présente une forme qui présente la particularité de présenter une portion qui sera appelée par simplicité « portion évasée » 2, pour laquelle la dimension orthoradiale o évolue positivement en s'éloignant radialement (selon la direction R) de l'axe de révolution du pignon d'échappement, c'est-à-dire dans la direction R s'étendant de la base 3 d'une dent vers son extrémité 4.

Notamment, le profil d'une telle dent peut présenter une forme ogivale, comprenant un rétrécissement de l'épaisseur de la dent en dessous du diamètre primitif du pignon. L'utilité de telles dents de pignon est de permettre une interaction initiale optimisée entre deux dents engrenées, grâce à une partie supérieure au diamètre primitif du pignon conçue pour engrener efficacement en début de mouvement. Simultanément, la réduction d'épaisseur en fond de dent, c'est-à-dire du côté de sa base, assure un désengagement adéquat avec la dent opposée, garantissant un transfert de mouvement fluide et précis. Ce mécanisme minimise le frottement et favorise une durabilité accrue de l'ensemble engrené.

Le concept de l'invention consiste à utiliser un procédé de fabrication basé sur un usinage laser particulier, qui permet notamment de fabriquer efficacement un tel profil de dents.

Un procédé de fabrication permettant de fabriquer un pignon d'échappement présentant des dents identiques, selon le profil de dents décrit ci-dessus, va maintenant être détaillé.

Le procédé de fabrication comprend une première étape consistant à se munir d'un bloc à usiner. Avantageusement, ce bloc à usiner est intégralement en céramique. Le matériau céramique est de préférence homogène dans le bloc à usiner, qui est monobloc. Il est avantageux d'utiliser une céramique technique, et de préférence une céramique technique frittée. L'adjectif « technique » fait référence aux propriétés de haute performance de la céramique choisie. En effet, une céramique technique peut atteindre des propriétés mécaniques, thermiques, voire électriques, et/ou biochimiques, très élevées, ainsi qu'une inertie chimique et un amagnétisme, qui la rendent appropriée pour une utilisation pour un composant horloger. Les céramiques techniques utilisées ici se distinguent des céramiques traditionnelles par leur composition, puisqu'elles sont issues de poudres synthétiques purifiées et non pas de poudres minérales naturelles comme par exemple du feldspath ou du kaolin. A titre d'exemple, la céramique peut être à base de zircone, notamment de zircone yttriée, ou à base d'alumine, à base d'un composite zircone-alumine, à base de carbure de silicium, ou à base de nitrure de silicium. En variante, le bloc à usiner comprend un revêtement céramique.

Eventuellement, la céramique comprend, en plus de la zircone et/ou de l'alumine et/ou d'un autre type de céramique, un ou plusieurs des éléments suivants :
- nanotubes de carbone,
- graphène,
- fullérènes,
- oxyde d'yttrium,
- oxyde de cérium,
- carbure de zirconium,
- carbure de titane,
- borure de zirconium,
- nitrure de bore,
- nitrure de titane.

Plus généralement, le matériau du bloc à usiner est avantageusement un matériau rigide et/ou fragile et/ou dur, de dureté supérieure ou égale à 500 HV, voire supérieure ou égale à 600 HV, voire supérieure ou égale à 700 HV, voire supérieure ou égale à 800 HV, voire supérieure ou égale à 1000 HV, voire supérieure ou égale à 1200 HV.

De manière alternative à la céramique, le bloc à usiner peut être en métal ou alliage métallique, notamment en acier inoxydable ou en acier austénitique ou en acier martensitique, ou un alliage métallique amorphe ou partiellement amorphe, ou en alliage de titane Ti, ou en Tungstène, ou en alliage de Zirconium. En variante, le matériau du bloc à usiner peut être un cermet. En variante encore, le matériau peut être une combinaison de ces matériaux mentionnés ci-dessus.

Ensuite, le procédé de fabrication met en oeuvre une deuxième étape consistant à former une ébauche de composant horloger, qui présente une forme de révolution autour d'un axe de révolution A.

Cette ébauche peut être obtenue par plusieurs procédés traditionnels comme l'extrusion d'un mélange de poudre et de liant, ou la micro-injection. Selon un mode de réalisation préféré, l'ébauche est formée par usinage : pour cela, le bloc à usiner est monté sur une broche de machine et est entrainé en rotation. Les flancs de l'ébauche sont alors profilés par décolletage ou tournage laser, de manière traditionnelle. En particulier, dans le cas du tournage laser, le faisceau laser peut présenter une énergie significative d'environ 30 µJ. Le faisceau laser peut être utilisé en précession.

Le procédé de fabrication met ensuite en oeuvre une troisième étape d'usinage de l'ébauche, qui peut comprendre deux phases. Cet usinage est avantageusement avec un laser, qui peut être un laser fonctionnant à une longueur d'onde de 515 nm, ou en variante fonctionnant à 1030 nm.

Dans une première phase, l'ébauche issue de la deuxième étape précédente est usinée par un dispositif d'usinage laser, qui peut être ou non le même que celui utilisé pour la formation de l'ébauche. Le laser, utilisé sans précession, est préférentiellement un modèle à impulsions ultracourtes, de type impulsions picosecondes ou idéalement femtosecondes (de longueur d'impulsion de l'ordre de 500 fs, voire 400 fs, voire inférieure à 400 fs). Cela évite que le laser n'affecte thermiquement la matière. Dans cette première phase, le faisceau laser travaille dans un même plan que celui de l'axe de révolution A de l'ébauche, de manière perpendiculaire ou sensiblement perpendiculaire à l'axe de révolution A. Pour cette raison, il est appelé « laser centré ». Le faisceau laser usine ainsi la pièce sur la longueur, et notamment découpe une partie de la future denture du pignon d'échappement. La figure 2 illustre schématiquement cette phase. La courbe 10 représente la forme initiale de l'ébauche. La courbe 12 représente la forme des dents obtenues par cette première phase d'usinage, avec un faisceau laser 11. La figure 2 représente de plus les portions évasées 2 particulières détaillées précédemment des dents finalisées telles qu'on souhaite les fabriquer. Dans cette première phase d'usinage, cette portion évasée 2 des dents ne peut pas être formée, car la partie large vers l'extrémité 4 des dents obstrue le passage du faisceau laser 11 et empêche la formation de la portion évasée 2. La figure 2 illustre de plus que le déplacement du faisceau laser 11, illustré par les deux vues respectivement de gauche et de droite de la figure 2, permet d'usiner tout un volume s'étendant entre deux dents 1 voisines.

L'usinage laser peut être mis en oeuvre de deux approches différentes dans cette première phase.

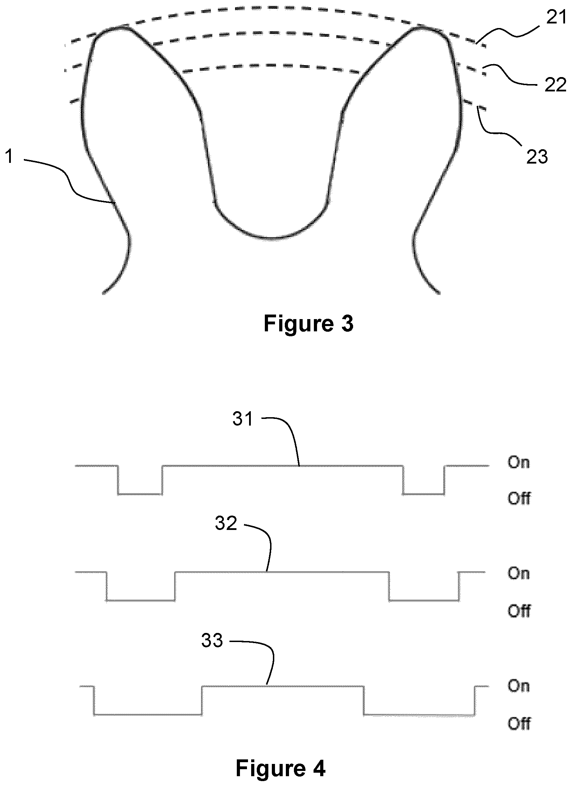

Dans une première approche, l'usinage est réalisé en continu sur toute la circonférence de l'ébauche, qui est entraînée en rotation sur une broche rotative du dispositif d'usinage autour de son axe de révolution A. Des tirs laser sont appliqués de manière séquentielle, pour générer des impulsions laser et former de préférence les dents en enlevant de la matière couche par couche, entre chaque sommet de dent. La vitesse de rotation de la broche peut être fortement réduite en comparaison à celle par exemple utilisée dans une éventuelle formation de l'ébauche par un même dispositif d'usinage laser. Les tirs laser sont synchronisés avec la rotation de l'ébauche et assurent la formation des dents et des creux souhaités, selon la courbe 12 de la figure 2. Les figures 3 et 4 illustrent la mise en oeuvre de cette première approche. La figure 3 représente trois courbes 21, 22, 23 qui correspondent à trois couches distinctes traitées par laser lors de la rotation de l'ébauche. La figure 4 illustre la répartition dans le temps et la durée des tirs laser pour chacune desdites trois couches, autrement dit illustre l'intermittence des tirs laser de chaque couche 21, 22, 23. Chaque partie haute (On) de chacune des trois lignes représente un tir laser respectivement 31, 32, 33, les parties creuses (Off) représentant des phases de laser interrompu, dans lesquelles la matière n'est pas enlevée, et reste donc sur l'ébauche pour appartenir aux dents en formation.

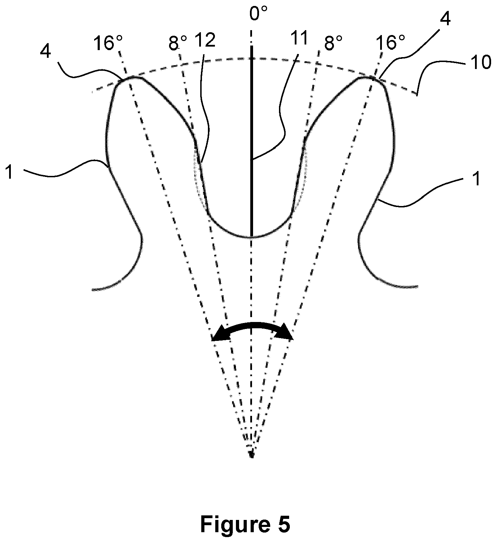

Dans une deuxième approche alternative à la première approche, un usinage laser est réalisé individuellement pour chaque dent. Dans ce cas, le laser opère selon une séquence continue, en étant mis en mouvement relativement à l'ébauche, pour effectuer des oscillations calculées de façon à permettre l'usinage entre deux dents. Le laser enlève la matière couche par couche. On exploite ainsi le passage répété du laser pour usiner plus profondément le centre de l'oscillation. L'amplitude de l'oscillation de l'ébauche est déterminée par plusieurs facteurs, comme la géométrie de la pièce souhaitée, la puissance du laser exprimée par la fluence énergétique et le diamètre de focalisation. L'angle d'oscillation est préférentiellement ajusté pour que le faisceau laser 11 atteigne les sommets 4 de deux dents 1 adjacentes. La figure 5 représente plus particulièrement la mise en oeuvre selon cette deuxième approche. Prenons l'exemple d'un pignon de 10 dents toutes identiques et symétriques. Avec un diamètre de focalisation du laser d'environ 12 µm et un écart aux sommets entre deux dents d'environ 125 µm, l'angle d'oscillation de la pièce pour l'usinage entre deux dents 1 est d'environ +/-16°, centré sur le fond de la denture. En resserrant cet angle (8° sur la figure) pendant un temps additionnel, il est possible de réaliser un usinage plus profond sur le fond des deux dents 1, pour finalement réaliser le profil selon la courbe 12, qui diffère du profil final recherché, notamment en réalisant pas les portions 2.

Comme cela a été décrit, la première phase d'usinage permet une première découpe des dents du pignon d'échappement, sans atteindre toutefois le profil final souhaité.

Pour cette raison, la troisième étape d'usinage met en oeuvre une deuxième phase d'usinage laser, durant laquelle l'alignement du laser est déporté de l'axe de révolution de l'ébauche, c'est-à-dire que le faisceau laser 11 généré n'est ni aligné avec l'axe de révolution de l'ébauche, ni orienté de manière à croiser l'axe de révolution. En remarque complémentaire, le faisceau laser n'est pas non plus tangent au bord de l'ébauche, c'est-à-dire n'est pas utilisé selon une incidence tangentielle à la surface usinée. Il sera simplement dénommé par l'expression simplifiée de « laser déporté » ou « laser décentré » dans la suite de la description. Cette réorientation du laser permet un usinage minutieux de la forme finale des dents 1, notamment des portions évasées 2 particulières, détaillées précédemment.

Pour ce faire, le laser est déporté sur un côté de l'axe de révolution de l'ébauche pour que son faisceau laser 11 puisse atteindre une dent 1 sous le diamètre primitif de l'ébauche sans entrave de la partie supérieure plus large de la dent 1. Ceci permet alors de retirer la matière sur toute la profondeur et l'épaisseur voulues pour finaliser le profil complexe complet de ladite dent 1.

Dans cette deuxième phase, la puissance du laser est avantageusement réduite : l'énergie pulsée du laser fluctue par exemple entre 1 et 20 µJ. La vitesse de rotation de l'ébauche peut de même être substantiellement diminuée, pour permettre l'usinage précis desdites portions particulières 2.

Cette deuxième phase d'usinage laser peut aussi être mise en oeuvre selon deux approches différentes.

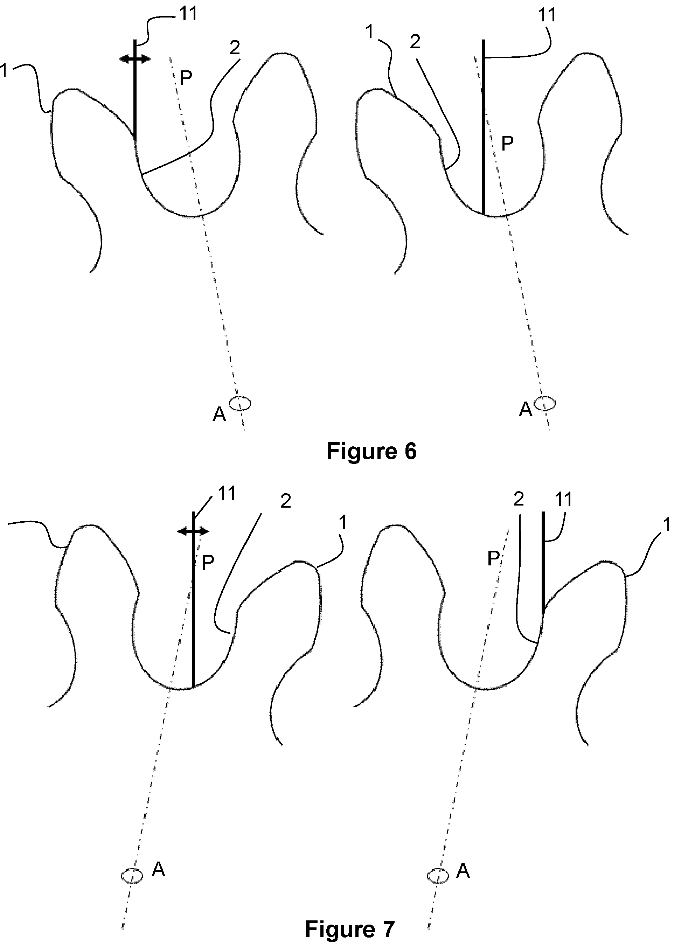

Dans une première approche, l'ébauche est immobilisée et orientée relativement au laser de sorte que le faisceau laser a un accès direct au fond de dent, sans entrave de la partie extrême des dents. Le laser est alors déplacé par éloignement ou rapprochement de l'axe de révolution, soit par translation du faisceau laser 11, soit par pivotement du faisceau laser, soit par combinaison des deux déplacements. La figure 6 illustre la finalisation de l'usinage laser d'un côté d'une première dent, selon cette première approche. La figure 7 illustre la finalisation de l'usinage laser d'un autre côté d'une deuxième dent voisine, selon cette première approche, après décentrage symétrique du laser relativement à un plan de symétrie P desdites deux dents 1 voisines, ce plan de symétrie P comprenant l'axe de révolution A de l'ébauche. Sur ces deux figures 6, 7, la figure de gauche, puis de droite, illustrent le déplacement du faisceau laser 11 au niveau de la portion évasée 2 en formation. Comme cela apparaît sur ces figures, le faisceau laser n'est pas orienté dans une direction qui croise l'axe de révolution A de l'ébauche, contrairement à l'usinage laser décrit en référence aux figures 2 et 5. Avantageusement, le faisceau laser est orienté dans une direction perpendiculaire à l'axe de révolution A ou formant un angle de 90° avec l'axe de révolution A, cet angle se définissant par le vecteur mathématique directionnel de la droite définie par le faisceau laser, quand bien même il ne croise pas cet axe de révolution A, comme mentionné ci-dessus. Nous dirons plus simplement que le laser présente une direction perpendiculaire à l'axe de révolution A. Plus généralement, cette direction présente un angle compris entre 45 et 90 degrés, voire entre 70 et 90 degrés, voire entre 80 et 90 degrés, relativement à l'axe de révolution A de l'ébauche.

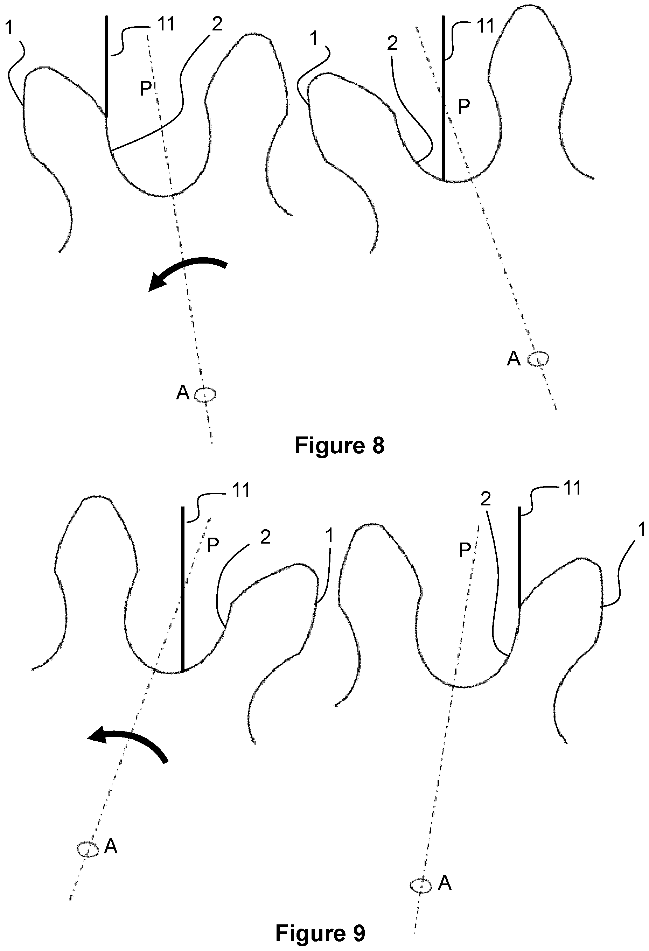

Dans une deuxième approche, le faisceau laser est immobilisé et orientée relativement à l'ébauche de sorte que le faisceau laser a un accès direct au fond de dent, sans entrave de la partie extrême des dents. Ainsi, au contraire de la première approche, c'est l'ébauche qui pivote légèrement autour de son axe de révolution A pour donner un accès direct à la zone à usiner de l'ébauche, pour former la portion évasée, sans entrave de la partie extrême de la dent, déjà terminée et qu'il ne faut pas usiner. La figure 8 illustre la finalisation de l'usinage laser d'un côté d'une première dent, selon cette deuxième approche. La figure 9 illustre la finalisation de l'usinage laser d'un autre côté d'une deuxième dent voisine, selon cette deuxième approche, après décentrage symétrique de l'ébauche relativement à un plan de symétrie P desdites deux dents 1 voisines, ce plan de symétrie P comprenant l'axe A de révolution de l'ébauche. Sur ces deux figures 8, 9, la figure de gauche, puis de droite, illustrent le changement d'inclinaison de l'ébauche relativement au faisceau laser 11, notamment au niveau de la portion évasée 2 en formation. Comme cela apparaît sur ces figures, le faisceau laser conserve une orientation relative à l'ébauche similaire à celle décrite en référence à la première approche, selon le principe de « laser décentré ».

Naturellement, en variante, une combinaison des deux approches est envisageable, la zone d'usinage de l'ébauche étant attaquée en déplaçant de manière coordonnée le faisceau laser et l'ébauche autour de son axe de révolution. A titre d'exemple de mise en oeuvre de cette troisième approche, le faisceau laser peut usiner le fond de deux dents voisines, si, de manière synchrone, l'ébauche est pivotée autour de son axe de révolution pour donner au laser un accès direct alternativement au fond des deux dents voisines, sans entrave de la partie extrême desdites deux dents voisines. Cette approche combinée permet finalement d'usiner simultanément ou quasi-simultanément la moitié de deux dents voisines, c'est-à-dire dans une même opération. Cette approche a ainsi pour avantage de réduire le temps d'usinage de la deuxième phase relativement aux deux approches précédentes.

Dans tous les cas, la troisième étape met en oeuvre la deuxième phase décrite ci-dessus, qui forme le coeur de concept de l'invention, pour permettre d'atteindre simplement des formes complexes de composant horloger, notamment au moins une portion évasée pour au moins une dent. Cette deuxième phase se résume finalement par une étape dans laquelle le faisceau laser et l'ébauche sont animés d'un déplacement relatif adapté au résultat souhaité, alors que le laser est déporté, c'est-à-dire que son axe, en référence avec la droite définie par le faisceau laser incident, n'est pas aligné et plus généralement non parallèle avec l'axe de révolution de l'ébauche, ne croise pas cet axe de révolution de l'ébauche, et n'est pas non plus tangentiel à l'ébauche à usiner.

En remarque, dans cette troisième étape, la première phase est facultative. Selon les géométries à usiner, elle peut ne pas être mise en oeuvre. Elle est donc optionnelle.

Selon un mode de réalisation, cette troisième étape peut mettre en oeuvre simultanément les deux phases précédentes, c'est-à-dire usiner l'ébauche simultanément avec un laser à axe centré d'une part et avec un laser déporté d'autre part. Ces deux usinages peuvent donc être réalisés dans une même opération.

La troisième étape a été décrite pour un usinage partiel de deux dents voisines. Naturellement, elle est répétée pour toutes les dents de l'ébauche. Pour cela, l'ébauche peut être pivotée, de manière continue ou non, durant et/ou après chaque usinage décrit précédemment, pour présenter toutes les dents au laser déporté. Comme évoqué précédemment, en variante ou complément, le laser déporté est déplacé autour de l'axe de révolution de l'ébauche.

En remarque, les orientations respectives choisies du laser et de l'ébauche permettent non seulement de former simplement des formes complexes mais aussi d'obtenir un état de surface amélioré relativement aux méthodes traditionnelles. En fin de la troisième étape, le composant horloger est fini ou semi-fini. Toutefois, optionnellement, le procédé de fabrication peut de plus comprendre une étape finale de terminaison pour atteindre une rugosité de surface prédéterminée.

Par exemple, une telle étape finale de terminaison peut être réalisée par l'utilisation de médias abrasifs, préférentiellement sur l'ensemble des surfaces du composant horloger. Notamment, cette étape peut comprendre la sollicitation mécanique via un mélange abrasif par impacts, préférentiellement par mise en mouvement vibratoire, oscillatoire ou rotatif, généralement effectué dans une cuve. Dans une telle cuve, un seul ou une multitude de composants horlogers peuvent être positionnés, notamment en vrac, pour leur traitement simultané.

Cette étape finale de terminaison peut être réalisée, de manière non limitative, par tonnelage et/ou trovalisation et/ou sablage et/ou microbillage et/ou giclage humide.

De plus, cette étape finale de terminaison s'applique sur toute la surface d'un composant horloger, ou en variante sur une partie seulement de cette surface, avantageusement au moins une surface visible du composant horloger.

Alternativement, cette étape finale de terminaison peut comprendre un polissage, qui peut être réalisé directement par la machine laser utilisée pour la troisième étape du procédé. Ce polissage peut être réalisé en continu ou pas, pendant ou après les différentes phases décrites précédemment (troisième étape) d'ablation laser.

Dans le mode de réalisation décrit précédemment, le procédé de fabrication a été décrit pour réaliser un pignon d'échappement comprenant des dents présentant toutes une même géométrie. Il peut naturellement être utilisé pour former tout composant horloger denté, tout engrenage. D'autre part, dans tous les cas, les dents peuvent toutes présenter le même profil ou en variante présenter des profils différents. Le procédé est adapté pour fabriquer un composant horloger comprenant une denture droite, hélicoïdale, spirale, ou à chevron et/ou une denture asymétrique et/ou une denture partielle et/ou une denture évolutive sur la circonférence, sur la profondeur ou sur la longueur du composant horloger. Dans tous les cas, l'invention est particulièrement avantageuse en ce qu'elle permet de fabriquer simplement toute dent, et même plus généralement toute forme, comprenant un profil transversal avec au moins une portion évasée, quelle que soit la forme de cette portion évasée, c'est-à-dire une portion comprenant une largeur qui augmente radialement en s'éloignant de l'axe de révolution.

Le procédé de l'invention peut être utilisé pour former de nombreux composants horlogers. Notamment, il est utile pour fabriquer un pignon ou une roue dentée, ainsi que son axe de rotation et/ou une dent d'engrenage. En effet, un avantage est que le procédé permet de fabriquer simultanément un axe de rotation et une portion dentée d'un même composant horloger, de manière monobloc, d'un seul tenant, évitant les inconvénients d'un assemblage postérieur d'un axe distinct d'une portion dentée.

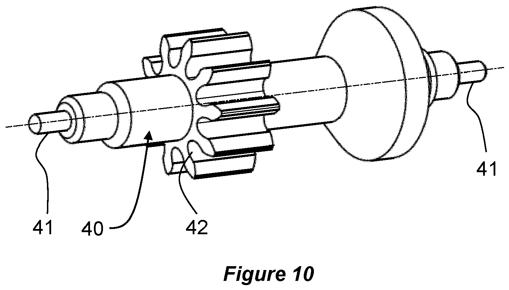

La figure 10 illustre à cet effet une vue d'un composant horloger 40 monobloc, d'un seul tenant, comprenant un axe avec deux pivots 41, respectivement sur chaque extrémité, et un pignon denté 42, selon l'invention. La figure 10 montre le profil transversal de chaque dent 1 du pignon denté 42, profil qui correspond sensiblement à celui de la figure 1.

Par ce biais, le procédé de fabrication permet la fabrication de nouvelles géométries d'arbres et/ou de dents, optimisant les fonctions d'engrenage. Par exemple, il autorise la configuration d'arbres optimisés pour le remontage dans un sens et un désengrènement dans l'autre.

L'invention porte aussi sur un composant horloger en tant que tel, se présentant en tout ou partie en un matériau de dureté supérieure ou égale à 800 HV, voire supérieure ou égale à 1000 HV, voire supérieure ou égale à 1200 HV, notamment en céramique à base de zircone ou à base d'alumine, et caractérisé en ce qu'il comprend une structure monobloc comprenant un axe de rotation et au moins une dent, dont une section sur un plan perpendiculaire à l'axe de révolution du composant horloger présente une forme comprenant une portion évasée.

L'invention porte aussi sur un dispositif d'usinage comprenant au moins une broche rotative configurée pour maintenir un bloc à usiner et un laser pouvant être déporté, configuré pour mettre en oeuvre un procédé de fabrication d'un composant horloger tel que décrit précédemment.

Grâce à l'invention, un laser permet d'usiner n'importe quelle matière sans avoir besoin de fraises de taillage spécifiques à une forme de dent. L'utilisation de fraises est d'autant plus problématique que ces dernières s'abiment et doivent régulièrement être remplacées. Des concepts « personnalisés » de composants et, plus spécifiquement de dents évasées, peuvent ainsi être réalisés.

## Revendications

1. Procédé de fabrication d'un composant horloger, comprenant les étapes suivantes :
- Se munir d'un bloc à usiner ;
- Former une ébauche de composant horloger comprenant une forme de révolution autour d'un axe de révolution (A) ;
**caractérisé en ce qu'**il comprend une étape consistant à :
- Usiner l'ébauche à l'aide d'un faisceau laser décentré dont la direction n'est pas parallèle à l'axe de révolution (A), ne croise pas l'axe de révolution (A), et n'est pas tangente à l'ébauche à usiner.

2. Procédé de fabrication d'un composant horloger selon la revendication précédente, **caractérisé en ce que** l'étape consistant à usiner l'ébauche à l'aide d'un faisceau laser décentré forme au moins une forme comprenant une portion à profil évasé, la section normale à l'axe de révolution (A) de l'ébauche présentant une forme dont la dimension orthoradiale augmente en s'éloignant radialement de l'axe de révolution (A).

3. Procédé de fabrication d'un composant horloger selon l'une des revendications précédentes, **caractérisé en ce que** l'étape consistant à usiner l'ébauche à l'aide d'un faisceau laser décentré utilise un laser dont l'angle du faisceau laser est compris entre 45 et 90 degrés, voire entre 70 et 90 degrés, voire entre 80 et 90 degrés, relativement à l'axe de révolution (A) de l'ébauche.

4. Procédé de fabrication d'un composant horloger selon l'une des revendications précédentes, **caractérisé en ce que** l'étape consistant à usiner l'ébauche à l'aide d'un laser décentré utilise un laser à impulsions ultracourtes, notamment un laser à impulsions femtosecondes.

5. Procédé de fabrication d'un composant horloger selon l'une des revendications précédentes, **caractérisé en ce que** l'étape consistant à usiner l'ébauche à l'aide d'un faisceau laser décentré utilise un pivotement de l'ébauche autour de son axe de révolution et/ou un déplacement du laser pour accéder aux zones de l'ébauche nécessitant un usinage.

6. Procédé de fabrication d'un composant horloger selon l'une des revendications précédentes, **caractérisé en ce que** le bloc à usiner est intégralement en céramique ou comprend un revêtement céramique, préférentiellement une céramique technique frittée et durcie.

7. Procédé de fabrication d'un composant horloger selon la revendication précédente, **caractérisé en ce que** la céramique est à base de zircone, notamment de zircone yttriée, ou à base d'alumine, à base d'un composite zircone-alumine, à base de carbure de silicium, ou à base de nitrure de silicium.

8. Procédé de fabrication d'un composant horloger selon l'une des revendications 1 à 5, **caractérisé en ce que** le bloc à usiner est en matériau rigide et/ou fragile et/ou dur de dureté supérieure ou égale à 500 HV, voire supérieure ou égale à 600 HV, voire supérieure ou égale à 700 HV, voire supérieure ou égale à 800 HV, voire supérieure ou égale à 1000 HV, voire supérieure ou égale à 1200 HV.

9. Procédé de fabrication d'un composant horloger selon l'une des revendications 1 à 5 ou selon la revendication 8, **caractérisé en ce que** le bloc est en métal ou alliage métallique, notamment en acier inoxydable ou en acier austénitique ou en acier martensitique, ou un alliage métallique amorphe ou partiellement amorphe, ou en alliage de titane Ti, ou en Tungstène, ou en alliage de Zirconium, ou un cermet, ou une combinaison de ces matériaux.

10. Procédé de fabrication d'un composant horloger selon l'une des revendications précédentes, **caractérisé en ce qu'**il comprend une étape supplémentaire consistant à usiner l'ébauche à l'aide d'un laser centré générant un faisceau laser dont la direction croise l'axe de révolution de l'ébauche, cette étape consistant à usiner l'ébauche à l'aide d'un laser centré étant mise en oeuvre avant ou simultanément à l'étape consistant à usiner l'ébauche à l'aide d'un laser décentré.

11. Procédé de fabrication d'un composant horloger selon la revendication précédente, **caractérisé en ce que** l'étape consistant à usiner l'ébauche à l'aide d'un laser centré opère sur l'ébauche, qui est entraînée en rotation continue et avec un laser agissant de manière séquentielle, et/ou **en ce que** l'étape consistant à usiner l'ébauche à l'aide d'un laser centré opère sur l'ébauche entraînée selon des oscillations.

12. Procédé de fabrication d'un composant horloger selon l'une des revendications précédentes, **caractérisé en ce que** l'étape consistant à former une ébauche de composant horloger avec une forme à symétrie de révolution met en oeuvre une étape d'extrusion d'un mélange de poudre et de liant, ou une étape de micro-injection, et/ou un tournage et usinage laser ou un tournage et usinage par un outil coupant selon une méthode de décolletage.

13. Procédé de fabrication d'un composant horloger selon l'une des revendications précédentes, **caractérisé en ce qu'**il comprend une étape finale de terminaison pour atteindre une rugosité de surface prédéterminée.

14. Procédé de fabrication d'un composant horloger selon l'une des revendications précédentes, **caractérisé en ce qu'**il fabrique tout ou partie d'un composant horloger monobloc, notamment un pignon ou une roue dentée, comprenant au moins un axe de rotation et au moins une dent d'engrenage, notamment comprenant une denture droite, hélicoïdale, spirale, ou à chevron et/ou une denture asymétrique et/ou une denture partielle et/ou une denture évolutive sur la circonférence, sur la profondeur ou sur la longueur du composant horloger.

15. Dispositif d'usinage comprenant au moins une broche rotative configurée pour maintenir un bloc à usiner et un laser pouvant être décentré, configuré pour mettre en oeuvre un procédé de fabrication d'un composant horloger selon l'une des revendications précédentes.

16. Composant horloger en matériau de dureté supérieure ou égale à 800 HV, voire supérieure ou égale à 1000 HV, voire supérieure ou égale à 1200 HV, notamment en céramique à base de zircone ou à base d'alumine, **caractérisé en ce qu'**il comprend une structure monobloc comprenant un axe de rotation et au moins une dent, dont une section par un plan perpendiculaire à l'axe de rotation présente une forme comprenant une portion à profil évasé, la section normale à l'axe de rotation présentant une forme dont la dimension orthoradiale augmente en s'éloignant radialement de l'axe de rotation.
